# EUROPÄISCHE PATENTSCHRIFT

(11) **EP 0 418 724 B1**
(45) Veröffentlichungstag und Bekanntmachung des Hinweises auf die Patenterteilung: **21.12.1994**
(21) Anmeldenummer: 90117604.0
(22) Anmeldetag: 13.09.1990
(51) Int. Cl.: B05D 7/22, B29C 41/46, B65D 83/14

(54) **Verfahren zum Herstellen eines Behälters mit Innenbeutel**
Method of manufacturing a container with inner bag
Procédé de fabrication d'un récipient muni d'une vessie intérieure

(30) Priorität: 22.09.1989 DE 3931624
(43) Veröffentlichungstag der Anmeldung: 27.03.1991
(73) Patentinhaber: LECHNER GmbH, D-78239 Rielasingen-Worblingen (DE)
(72) Erfinder: Stoffel, Gerd, D-7750 Konstanz (DE)
(74) Vertreter: Weiss, Peter, Dr. rer.nat.

(56) Entgegenhaltungen:
- CH-A- 211 158
- CH-A- 224 478
- DE-C- 742 248
- GB-A- 330 516
- US-A- 3 691 269
- US-A- 3 896 602
- US-A- 4 865 787

## Beschreibung

Die Erfindung betrifft ein Verfahren zum Herstellen eines Behälters mit Innenbeutel zur Aufnahme eines Füllgutes, welches durch ein Treibmittel zwischen Behälter und Innenbeutel aus einem Ventil ausgebracht wird, wobei nach dem Herstellen des Behälters, beispielsweise durch Pressen, Tiefziehen. , dessen Inneres mit einem Innenschutzlack versehen und anschließend geprimert wird, worauf Kunststoff für den Innenbeutel eingespritzt und anschließend der Behälter mit Innenbeutel Wärme zur Entfernung von überschüssigem Lösungsmittel aus dem Kunststoff ausgesetzt wird.

Ein derartiger Zweikammerbehälter ist beispielsweise aus der DE-A- 23 60 319 bekannt.

Dort wird das Material für den Innenbeutel als Beschichtung beispielsweise durch Eingießen des flüssigen Beschichtungsmaterials durch eine Düse in das Druckgefäß vorgenommen. Danach wird das Druckgefäß umgedreht, damit die überschüssige Flüssigkeit herauslaufen kann. Eine andere Möglichkeit der Beschichtung ist das Einbringen mittels eines in das Innere des Behälters abgesenkten Sprühkopfes, wobei der Sprühkopf oder das Druckgefäß selbst gedreht wird, um für eine gleichmäßige Beschichtung zu sorgen.

Nachteilig bei diesen Verfahren hat sich jedoch erwiesen, daß die Beschichtung bzw. der Innenbeutel beim nachträglichen Erwärmen zum Ausdunsten des überschüssigen Lösungsmittels wieder verformt wird, indem das Material des Innenbeutels zusammenfließt und Luft-bzw. Lösungsmitteleinschlüsse bildet, die zu unerwünschten Unregelmäßigkeiten in dem Innenbeutel führen. Durch diese Einschlüsse kann der Innenbeutel sogar undicht werden.

Ferner wird in der Praxis aus Kosten- und Herstellungsgründen PVC (Polyvinylchlorid) zur Herstellung des Innenbeutels verwendet. Diesem PVC-Material muß jedoch ein Weichmacher beigegeben werden, damit sich der Innenbeutel ordnungsgemäß falten kann. Der Weichmacher hat wiederum den Nachteil, daß er ins Füllgut übergeht und deshalb der entsprechende Behälter für Lebensmittel, Pharmazeutika od. dgl. nicht geeignet ist. Des weiteren entsteht beim Recyclieren von PVC Salzsäure, was wiederum die Umwelt erheblich beeinträchtigt.

Der Erfinder hat sich zum Ziel gesetzt, ein Verfahren der oben genannten Art zu entwickeln, bei welchem diese Nachteile beseitigt sind, wobei insbesondere ein umweltfreundlicher Innenbeutel hergestellt werden soll, der weitestgehend homogen ausgestaltet ist.

Zur Lösung dieser Aufgabe führt, daß der Behälter nach dem Einspritzen des Kunststoffes in einen Ofen verbracht und dort über einen längeren Zeitraum gedreht wird, und sodann ein Bodenloch für das spätere Einbringen des Treibmittels ausgeformt wird.

Durch dieses Drehen in bevorzugt einem Umluftofen wird gewährleistet, daß kein Zusammenlaufen des Materials des Innenbeutels an einer bestimmten Stelle des Behälters stattfindet und hier Einschlüsse, seien es Luft- oder Lösungsmitteleinschlüsse entstehen. In der Praxis hat sich gezeigt, daß ein absolut homogener Innenbeutel entsteht, der beispielsweise eine Dicke von 80-120µ aufweist.

In der Praxis hat sich herausgestellt, daß ein Drehen über einen Zeitraum von mindestens 2 Minuten bei 140-200°C ausreicht, um den gewünschten homogenen Innenbeutel herzustellen.

Bevorzugt werden zur Herstellung des Innenbeutels Polyolefine oder Gemische mit Polyolefinen verwendet. Polyolefin läßt sich im Gegensatz zu PVC sehr gut beim Recyclieren des Behälters beseitigen, da Polyolefin fast vollständig verbrennt und keine unerwünschte Umweltbelastung stattfindet. Es können auch weitere umweltfreundliche Kunststoffe Anwendung finden.

Da der Innenbeutel sich infolge dieser erfindungsgemäßen Herstellungsmethode gänzlich dem Innenraum bzw. den Innenkonturen des Behälters anpaßt, könnten sich bei der Herstellung des Bodenlochs insofern Schwierigkeiten ergeben, als durch das Einführen des Stanzstempels für das Bodenloch eine Verletzung des Innenbeutels stattfindet.

Diesem Nachteil beugt ein weiteres Merkmal der Erfindung vor, nämlich daß das Bodenloch nur so weit angestanzt wird, daß die Stanzronde erst bei Beaufschlagung durch den Druck des Treibmittels entfernt wird. Durch das Stanzen entsteht quasi eine Sollbruchstelle, wobei jedoch der Boden nicht gänzlich durchgestanzt, sondern nur ganz erheblich an dieser Stelle geschwächt ist.

## Patentansprüche

1. Verfahren zum Herstellen eines Behälters mit Innenbeutel zur Aufnahme eines Füllgutes, welches durch ein Treibmittel zwischen Behälter und Innenbeutel aus einem Ventil ausgebracht wird, wobei nach dem Herstellen des Behälters, beispielsweise durch Pressen, Tiefziehen, dessen Inneres mit einem Innenschutzlack versehen und anschließend geprimert wird, worauf Kunststoff für den Innenbeutel eingespritzt und anschließend der Behälter mit Innenbeutel Wärme zur Entfernung von überschüssigem Lösungsmittel aus dem Kunststoff ausgesetzt wird,
dadurch gekennzeichnet,
daß der Behälter nach dem Einspritzen des Kunststoffes in einen Ofen verbracht und dort über einen längeren Zeitraum gedreht wird und sodann ein Bodenloch für das spätere Einbringen des Treibittels ausgeformt wird.

2. Verfahren nach Anspruch 1, dadurch gekennzeichnet, daß das Drehen mindestens 2 Minuten lang bei 140-200°C durchgeführt wird.

3. Verfahren nach Anspruch 1 oder 2, dadurch gekennzeichnet, daß als Kunststoff für den Innenbeutel ein Polyolefin od. dgl. Stoff oder ein Gemisch aus Polyolefinen oder Polyolefinen mit anderen Kunststoffen oder andere Kunststoffe verwendet werden.

4. Verfahren nach einem der Ansprüche 1 bis 3, dadurch gekennzeichnet, daß das Bodenloch nur soweit angestanzt wird, daß die Stanzronde erst bei Beaufschlagung durch den Druck des einzufüllenden Treibmittels entfernt wird.

## Claims

1. Method of manufacturing a container with an inner bag for receiving a filling, which is discharged from a valve by a blowing agent between container and inner bag, wherein, after manufacture of the container, for example by pressing, deep drawing, the interior thereof is provided with an internal protective lacquer and is subsequently primed, whereupon plastics material for the inner bag is injected and the container with inner bag is subsequently exposed to heat to remove excess solvent from the plastics material, characterised in that the container is placed in an oven after injection of the plastics material and is rotated there for a prolonged period of time and a floor hole is then shaped out for the subsequent introduction of the blowing agent.

2. Method according to claim 1, characterised in that rotation is carried out for at least 2 minutes at 140 to 200°C.

3. Method according to claim 1 or 2, characterised in that a polyolefin or similar substance or a mixture of polyolefins or polyolefins with other plastics materials or other plastics materials are used as plastics material for the inner bag.

4. Method according to one of claims 1 to 3, characterised in that the floor hole is stamped only to the extent that the circular blank is not removed until it is loaded by the pressure of the blowing agent to be introduced.

## Revendications

1. Procédé pour fabriquer un réservoir avec une poche intérieure pour recevoir un produit de remplissage, qui est expulsé par un agent propulseur entre le réservoir et la poche intérieure à partir d'une soupape, procédé dans le cas duquel après la fabrication du réservoir, par exemple par pressage, emboutissage profond, son intérieur est pourvu d'un vernis interne de protection et reçoit ensuite un primaire, puis on injecte une matière plastique pour la poche intérieure, et ensuite on expose le réservoir avec la poche intérieure à la chaleur pour enlever le solvant en excès de la matière plastique, procédé caractérisé en ce que le réservoir est mis, après l'injection de la matière plastique, dans une étuve et on fait tourner dans cette étuve le réservoir pendant une assez longue période de temps et on forme ensuite un trou pour l'introduction ultérieure de l'agent propulseur.

2. Procédé selon la revendication 1, caractérisé en ce que la rotation est poursuivie pendant au moins 2 minutes à 140° à 200°C.

3. Procédé selon la revendication 1 ou 2, caractérisé en ce que l'on utilise comme matière plastique pour la poche intérieure une polyoléfine ou une matière analogue ou un mélange à base de polyoléfine, ou une polyoléfine avec d'autres matières plastiques ou d'autres matières plastiques.

4. Procédé selon l'une des revendications 1 à 3, caractérisé en ce que la bande n'est estampée que jusqu'au point où la découpe ronde de l'estampage est enlevée en la sollicitant par la pression de l'agent propulseur à introduire.
